# FASCICULE DE BREVET EUROPEEN

(11) **EP 2 661 377 B1**
(45) Date de publication et mention de la délivrance du brevet: **20.09.2017**
(21) Numéro de dépôt: 12700936.3
(22) Date de dépôt: 04.01.2012
(51) Int. Cl.: B60C 11/04

(54) **BANDE DE ROULEMENT DE PNEUMATIQUE POUR TRACTEUR AGRICOLE**
REIFENLAUFSTREIFEN FÜR EINEN LANDWIRTSCHAFTLICHEN TRAKTOR
TIRE TREAD FOR AN AGRICULTURAL TRACTOR

(30) Priorité: 06.01.2011 FR 1150085
(43) Date de publication de la demande: 13.11.2013
(73) Titulaire: Compagnie Générale des Etablissements Michelin, 63000 Clermont-Ferrand (FR)
(72) Inventeur: VERVAET, Patrick, F-63040 Clermont-Ferrand Cedex 9 (FR); ROYER, Thierry, F-63040 Clermont-Ferrand Cedex 9 (FR)
(74) Mandataire: Le Cam, Stéphane Georges Elie
(86) Numéro de dépôt international: PCT/EP2012/050073
(87) Numéro de publication internationale: WO 2012/093131

(56) Documents cités:
- GB-A- 1 312 549
- US-A- 3 603 370
- US-A- 4 480 672

## Description

La présente invention concerne un pneumatique pour véhicule lourd destiné à rouler sur divers types de sol, et en particulier la bande de roulement d'un tel pneumatique.

Bien que non limitée à cette application, l'invention sera plus particulièrement décrite en référence à un engin agricole polyvalent, pouvant rouler aussi bien dans les champs que sur route, tel qu'un tracteur agricole.

Un pneumatique pour tracteur agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour tracteur agricole, et en particulier sa bande de roulement destinée à entrer en contact avec le sol, doit présenter un compromis de performances entre la traction en champ, la résistance aux arrachements, la résistance à l'usure sur route, la résistance au roulement, le confort vibratoire sur route.

La tendance à un agrandissement de la taille des exploitations agricoles conduit à une utilisation de plus en plus fréquente des tracteurs agricoles sur route et à une augmentation de leur vitesse en usage routier, jusqu'à des vitesses pouvant atteindre 40 km/h voire 65 km/h. Cette évolution de l'usage implique des exigences de plus en plus en grandes en ce qui concerne les performances du pneumatique sur route telles que la résistance à l'usure, la résistance au roulement et le confort vibratoire. La résistance à l'usure, sous couple moteur élevé, d'un pneumatique pour essieu moteur de tracteur agricole est aujourd'hui une performance exigeante, compte tenu de l'augmentation de la puissance mécanique des tracteurs agricoles jusqu'à, par exemple, des valeurs de l'ordre de 500 ch.

De façon générale, un pneumatique ayant une géométrie de révolution autour d'un axe de rotation, la géométrie du pneumatique peut être décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Dans ce qui suit, les expressions « radialement intérieur » et « radialement extérieure» signifient respectivement « plus proche de l'axe de rotation du pneumatique, selon la direction radiale » et «plus éloigné de l'axe de rotation du pneumatique, selon la direction radiale». Les expressions « axialement intérieur » et « axialement extérieur» signifient respectivement « plus proche du plan équatorial, selon la direction axiale » et « plus éloigné du plan équatorial, selon la direction axiale », le plan équatorial étant le plan perpendiculaire à l'axe de rotation du pneumatique et passant par le milieu de la surface de roulement du pneumatique.

Un pneumatique comprend, de façon générale, un sommet comprenant une bande roulement destinée à venir en contact avec le sol par l'intermédiaire d'une surface de roulement, deux bourrelets destinés à venir en contact avec une jante et deux flancs reliant le sommet aux bourrelets. Un pneumatique pour tracteur agricole comprend une armature de carcasse, ancrée dans chaque bourrelet, usuellement composée d'au moins une couche d'éléments de renforcement textiles, les dits éléments de renforcement étant sensiblement parallèles entre eux dans la couche et pouvant être sensiblement radiaux, c'est-à-dire sensiblement perpendiculaires à la direction circonférentielle, et/ou croisés d'une couche à la suivante en formant, avec la direction circonférentielle, des angles égaux ou différents. L'armature de carcasse est habituellement surmontée radialement extérieurement d'une armature de sommet composée d'au moins deux couches de sommet de travail, constituées d'éléments de renforcement textiles ou métalliques croisés d'une couche à la suivante en formant avec la direction circonférentielle des angles faibles.

La bande de roulement, au cours de la rotation du pneumatique, vient en contact avec le sol par l'intermédiaire d'une surface de roulement. La surface de roulement comprend deux extrémités axiales qui sont les points les plus axialement extérieurs de ladite surface entrant en contact avec le sol. La distance axiale, mesurée parallèlement à l'axe de rotation du pneumatique entre les deux extrémités axiales de la surface de roulement, définit la largeur de bande de roulement.

La bande de roulement comprend généralement une pluralité d'éléments en relief ou barrettes, de forme parallélépipédique allongée constituée d'au moins une portion rectiligne ou curviligne, et séparés par des sillons.

Selon la direction radiale, une barrette s'étend entre une surface intérieure de révolution autour de l'axe de rotation du pneumatique et la surface de roulement, la distance radiale entre la surface intérieure et la surface de roulement définissant la hauteur de barrette. La face radialement extérieure de la barrette, appartenant à la surface de roulement, qui entre en contact avec le sol, lors du passage de la barrette dans l'aire de contact du pneumatique, est appelée face de contact de la barrette.

Selon la direction axiale, une barrette s'étend entre une face d'extrémité axialement extérieure, et une face d'extrémité axialement intérieure.

Selon la direction circonférentielle, une barrette s'étend entre une face latérale d'attaque et une face latérale de fuite. La face latérale d'attaque est la face dont l'arête radialement extérieure, intersection de ladite face avec la surface de roulement, ou bord d'attaque entre en premier en contact avec le sol, lors du passage de la barrette dans l'aire de contact du pneumatique avec le sol, au cours de la rotation du pneumatique. La face latérale de fuite est la face dont l'arête radialement extérieure, intersection de ladite face avec la surface de roulement, ou bord de fuite entre en dernier en contact avec le sol, lors du passage de la barrette dans l'aire de contact du pneumatique avec le sol, au cours de la rotation du pneumatique.

Une barrette a usuellement un angle d'inclinaison moyen, par rapport à la direction circonférentielle, proche de 45°. L'angle d'inclinaison moyen est l'angle de la droite passant par les extrémités respectivement axialement extérieure et intérieure de la ligne moyenne de la face de contact, la ligne moyenne étant l'ensemble des points de la face de contact équidistants des bords d'attaque et de fuite.

La bande de roulement d'un pneumatique pour tracteur agricole comprend usuellement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

Le document US 4383567 décrit une bande de roulement pour pneumatique de tracteur agricole, comprenant une alternance de barrettes longues et des barrettes courtes. Selon ce document, une barrette longue, dont la distance axiale entre extrémités est supérieure à la demi- largeur axiale de la bande de roulement, est constituée de trois portions rectilignes, alors qu'une barrette courte, dont la distance axiale entre extrémités est inférieure à la demi-largeur axiale de la bande de roulement, est constituée de deux portions rectilignes. Le document US 4534392 propose une variante de la solution précédente dans laquelle une combinaison de deux barrettes longues successives alterne avec une barrette courte. L'avantage de telles bandes de roulement est d'améliorer le confort de roulage sur route, sans diminuer la performance de traction en champ. Toutefois, ces solutions présentent l'inconvénient de provoquer une usure plus rapide des barrettes courtes par rapport aux barrettes longues, entraînant une usure irrégulière de la bande roulement et le retrait prématuré du pneumatique.

Les documents US 5046541 et US 5411067 décrivent respectivement des barrettes courtes et des barrettes longues discontinues, qui améliorent sensiblement le problème d'usure irrégulière précédemment mentionné. L'inconvénient de ces solutions est d'entraîner une usure plus rapide du pneumatique, ce qui est une cause de retrait prématuré du pneumatique.

Le document US 6382284 vise à améliorer le compromis entre la traction et l'usure, en proposant une bande de roulement dissymétrique, avec des barrettes courtes à l'épaule et des éléments en relief au centre, assurant la fonction des barrettes longues des solutions précédemment décrites. La dissymétrie de sculpture présente l'inconvénient d'une contrainte de montage entre les côtés gauche et droit de l'essieu du tracteur agricole. La vitesse d'usure au centre de la bande de roulement est également augmentée en raison de la dissymétrie de la sculpture, d'où une diminution de la durée d'utilisation du pneumatique.

Le document US3603370 décrit un pneumatique selon le préambule de la revendication 1.

La présente invention a pour objectif d'améliorer la traction en champ d'un pneumatique pour essieu moteur d'engin agricole polyvalent, pouvant rouler aussi bien dans les champs que sur route, tel qu'un tracteur agricole, en garantissant un compromis satisfaisant avec l'usure sous couple moteur et le confort vibratoire sur route.

Ce but a été atteint selon l'invention par un pneumatique pour engin agricole polyvalent comprenant:
- une bande de roulement destinée à venir en contact avec un sol par l'intermédiaire d'une surface de roulement ayant deux extrémités axiales, la distance axiale entre les extrémités axiales étant la largeur de bande de roulement,
- la bande de roulement comprenant une pluralité de barrettes s'étendant radialement entre une surface intérieure de révolution autour de l'axe de rotation du pneumatique et la surface de roulement, la distance radiale entre lesdites surfaces étant la hauteur de barrette,
- chaque barrette comprenant une face latérale d'attaque, une face latérale de fuite, une face d'extrémité axialement extérieure, une face d'extrémité axialement intérieure et une face de contact,
- la pluralité de barrettes étant répartie en une première rangée de barrettes s'étendant axialement à partir d'une première extrémité axiale de la bande de roulement et une seconde rangée de barrettes s'étendant axialement à partir d'une seconde extrémité axiale de la bande de roulement, la seconde rangée de barrettes se déduisant de la première rangée de barrettes par une symétrie par rapport au plan équatorial du pneumatique suivie d'une rotation autour de l'axe de rotation du pneumatique,
- chaque rangée de barrettes étant constituée d'une alternance de barrettes longues, dont la distance axiale entre les faces d'extrémité respectivement axialement extérieure et intérieure est au moins égale à la moitié de la largeur de bande de roulement, et de barrettes courtes, dont la distance axiale entre les faces d'extrémité respectivement axialement extérieure et intérieure est au plus égale à la moitié de la largeur de bande de roulement,
- la face d'extrémité axialement intérieure d'une première barrette longue d'une rangée de barrettes étant séparée de la face latérale de fuite de la deuxième barrette longue de la rangée de barrettes symétrique, la plus proche de la face d'extrémité axialement intérieure de la première barrette longue, par une rainure d'extrémité de largeur au moins égale à 10% et au plus égale à 100% de la hauteur de barrette.

La pluralité de barrettes, constituant la bande de roulement, est répartie en une première rangée de barrettes s'étendant axialement à partir d'une première extrémité axiale, ou premier bord, de la bande de roulement et une seconde rangée de barrettes s'étendant axialement à partir d'une seconde extrémité axiale, ou second bord, de la bande de roulement. La seconde rangée de barrettes se déduit de la première rangée de barrettes par une symétrie par rapport au plan équatorial du pneumatique, passant par le milieu de la bande roulement et perpendiculaire à l'axe de rotation du pneumatique, suivie d'une rotation autour de l'axe de rotation du pneumatique. En d'autres termes la seconde rangée de barrettes est constituée de barrettes identiques à celles de la première rangée, disposées en miroir de celles de première rangée mais décalées circonférentiellement. Cette configuration des première et seconde rangées de barrettes confère à la bande de roulement des motifs en chevrons ou en V décalés.

Chaque rangée de barrettes est par ailleurs constituée d'une alternance de barrettes longues et de barrettes courtes. Une barrette est dite longue lorsque la distance axiale, mesurée parallèlement à l'axe de rotation du pneumatique, entre les faces d'extrémité respectivement axialement extérieure et intérieure, ou plus précisément entre les centres desdites faces d'extrémité, est au moins égale à la moitié de la largeur de bande de roulement. Pour une barrette longue dont la face d'extrémité axialement extérieure est positionnée au niveau d'une extrémité axiale ou bord de la bande de roulement, cela implique que la face d'extrémité axialement intérieure de ladite barrette longue est positionnée au-delà du plan équatorial. Une barrette est dite courte lorsque la distance axiale, mesurée parallèlement à l'axe de rotation du pneumatique, entre les faces d'extrémité respectivement axialement extérieure et intérieure, ou plus précisément entre les centres desdites faces d'extrémité, est au plus égale à la moitié de la largeur de bande de roulement. Pour une barrette courte dont la face d'extrémité axialement extérieure est positionnée au niveau d'une extrémité axiale ou bord de la bande de roulement, cela implique que la face d'extrémité axialement intérieure de ladite barrette courte est positionnée en deçà du plan équatorial.

Selon l'invention, la face d'extrémité axialement intérieure d'une première barrette longue d'une rangée de barrettes est avantageusement séparée de la face latérale de fuite de la deuxième barrette longue de la rangée de barrettes symétrique, la plus proche de la face d'extrémité axialement intérieure de la première barrette longue, par une rainure d'extrémité de largeur au moins égale à 10% et au plus égale à 100% de la hauteur de barrette.

La rainure d'extrémité est délimitée par la face d'extrémité axialement intérieure d'une première barrette longue d'une rangée de barrettes et par la face latérale de fuite de la deuxième barrette longue de la rangée de barrettes symétrique, la plus proche de la face d'extrémité axialement intérieure de la première barrette longue. La largeur de rainure d'extrémité est la distance entre les arêtes d'intersection respectives de ces deux faces avec la surface de roulement. Compte tenu d'une largeur de rainure d'extrémité comprise entre 10% et 100% de la hauteur de barrette, lors du passage dans l'aire de contact du pneumatique, les deux faces de la rainure d'extrémité viennent en contact. La fermeture de la rainure d'extrémité assure ainsi une continuité structurelle entre les deux barrettes longues délimitant la rainure d'extrémité, d'où une rigidification de l'extrémité axialement intérieure de la première barrette longue. Si l'on considère toutes les barrettes longues dans l'aire de contact du pneumatique, on observe une continuité structurelle entre les barrettes longues, dans leurs parties axialement intérieures, ainsi qu'un cloisonnement de la partie centrale de la bande de roulement par les barrettes longues.

Le cloisonnement de la partie centrale de la bande de roulement par les barrettes longues permet un cisaillement optimisé de la terre contenue dans les cellules du cloisonnement, ce qui entraîne une amélioration de la capacité de traction du pneumatique en champ.

L'augmentation de la rigidité circonférentielle au centre de la bande de roulement résultant de la rigidification des extrémités axialement intérieures des barrettes longues entraîne une amélioration de la résistance à l'usure sous couple du pneumatique, en usage hors champ.

Enfin, la continuité structurelle des barrettes longues au centre de la bande de roulement garantit un confort vibratoire, en usage hors champ.

Selon un premier mode de réalisation de l'invention, la rainure d'extrémité entre la face d'extrémité axialement intérieure d'une première barrette longue d'une rangée de barrettes et la face latérale de fuite d'une deuxième barrette longue de la rangée de barrettes symétrique, la plus proche de la face d'extrémité axialement intérieure de la première barrette longue, s'étend radialement entre la surface intérieure et la surface de roulement de la bande de roulement.

En d'autres termes, la rainure d'extrémité s'étend avantageusement radialement sur toute la hauteur de barrette, ce qui crée une articulation complète entre la face d'extrémité axialement intérieure de la première barrette longue et la face latérale de fuite de la deuxième barrette longue, d'où une mise à plat facilitée de la bande de roulement dans l'aire de contact au sol.

Selon un deuxième mode de réalisation de l'invention, la rainure d'extrémité entre la face d'extrémité axialement intérieure d'une première barrette longue d'une rangée de barrettes et la face latérale de fuite d'une deuxième barrette longue de la rangée de barrettes symétrique, la plus proche de la face d'extrémité axialement intérieure de la première barrette longue, est au moins en partie remplie par un élément élastomérique de liaison s'étendant radialement vers l'extérieur depuis la surface intérieure de la bande de roulement.

La présence d'un élément élastomérique de liaison dans la rainure d'extrémité implique une articulation entre la face d'extrémité axialement intérieure de la première barrette longue et la face latérale de fuite de la deuxième barrette longue, moins complète que dans le premier mode de réalisation. En revanche, par rapport au premier mode de réalisation, du fait de la présence en fond de rainure de l'élément élastomérique de liaison, la rigidification des extrémités axialement intérieures de barrette longue est supérieure et le cloisonnement de la bande de roulement par les barrettes longues est plus efficace. L'élément élastomérique de liaison garantit également une meilleure tenue aux arrachements des extrémités axialement intérieures de barrette longue.

Dans le deuxième mode de réalisation, la hauteur radiale de l'élément élastomérique de liaison, définie entre la surface intérieure de la bande de roulement et la face radialement extérieure de l'élément élastomérique de liaison, est avantageusement au plus égale à 75% de la hauteur de barrette. Corrélativement, la profondeur effective de la rainure d'extrémité, définie entre la surface de roulement et la face radialement extérieure de l'élément élastomérique de liaison, est au moins égale à 25% de la hauteur de barrette. L'élément de liaison permet de rigidifier mécaniquement la face d'extrémité axialement intérieure de la première barrette longue, alors que la rainure d'extrémité permet de pénétrer dans le sol en champ. Ce choix de conception est donc un compromis entre la rigidification mécanique et la protection contre les arrachements de l'extrémité axialement intérieure de barrette longue et son aptitude à pénétrer la terre, en utilisation en champ.

Il est avantageux que la distance axiale entre les faces d'extrémité respectivement axialement extérieure et intérieure d'une barrette longue soit au plus égale à 70% de la largeur de bande de roulement. En d'autres termes, la distance axiale entre les faces d'extrémité respectivement axialement extérieure et intérieure d'une barrette longue est comprise entre 50% et 70% de la largeur de bande de roulement. Cette contrainte de conception garantit la compatibilité géométrique des barrettes d'une rangée donnée avec les barrettes courtes de la rangée symétrique.

La distance axiale entre les faces d'extrémité respectivement axialement extérieure et intérieure d'une barrette courte est avantageusement au moins égale à 20% de la largeur de bande de roulement. En deçà de 20% de la largeur de bande de roulement, la barrette courte a une largeur axiale insuffisante pour participer efficacement à la traction en champ. De plus, une barrette trop courte est plus fragile mécaniquement et sensible aux arrachements.

La distance axiale entre les faces d'extrémité respectivement axialement extérieure et intérieure d'une barrette courte est encore avantageusement au plus égale à 40% de la largeur de bande de roulement. Au-delà de 40% de la largeur de bande de roulement, la barrette courte a une largeur axiale trop importante susceptible d'entraîner une incompatibilité géométrique avec les barrettes longues de la rangée symétrique.

Quel que soit le type de barrette, l'angle d'inclinaison de la tangente à la ligne moyenne de la face de contact d'une barrette au point d'extrémité axialement extérieure de ladite ligne moyenne, par rapport à la direction circonférentielle, est au moins égal à 45° et au plus égal à 90°, et de préférence au moins égal à 50° et au plus égal à 75°. Un angle au moins égal à 45° et au plus égal à 90°, et de préférence au moins égal à 50° et au plus égal à 75°, implique une orientation plutôt radiale de la barrette au niveau du bord de bande de roulement, ce qui est favorable à une bonne capacité de traction en champ.

Dans le cas d'une barrette longue, l'angle d'inclinaison de la tangente à la ligne moyenne de la face de contact d'une barrette longue au point d'extrémité axialement intérieure de ladite ligne moyenne, par rapport à la direction circonférentielle, est au moins égal à 15° et au plus égal à 45°, et de préférence au moins égal à 25° et au plus égal à 35°. Un tel intervalle d'angles d'inclinaison garantit une orientation plutôt circonférentielle de la barrette longue au voisinage du centre de la bande de roulement, en vue d'augmenter la rigidité circonférentielle, et donc d'améliorer l'usure au centre sous couple et le confort vibratoire.

Pour une barrette longue, il est également avantageux que l'angle d'inclinaison moyen de la droite passant par les points d'extrémité respectivement axialement extérieure et intérieure de la ligne moyenne de la face de contact de la barrette longue, par rapport à la direction circonférentielle, soit au moins égal à 40° et au plus égal à 60°. Cet angle d'inclinaison moyen de la barrette permet un compromis entre les performances de traction en champ, d'usure sur route et de confort vibratoire.

Une variante avantageuse des modes de réalisation précédents est que chaque barrette longue comprenne au moins une rainure interne entre ses faces d'extrémité respectivement axialement extérieure et intérieure. Cette discontinuité au moins partielle crée une articulation dans la barrette longue qui facilite sa mise à plat lors de son passage dans l'aire de contact.

Pour un fonctionnement optimal, une rainure interne d'une barrette longue a une largeur au plus égale à 100% de la hauteur de barrette, de telle sorte que la rainure interne puisse se refermer lors du passage de la barrette longue dans l'aire de contact.

La profondeur radiale d'une rainure interne d'une barrette longue est au moins égale à 25% de la hauteur de barrette. Cette profondeur radiale est la distance radiale mesurée entre la surface de roulement et le fond de la rainure. La profondeur radiale doit avoir une valeur minimale pour produire l'effet d'articulation locale de la barrette longue.

Une seule rainure interne est a priori suffisante pour produire l'effet d'articulation locale de la barrette longue. Plusieurs rainures internes seraient susceptibles de diminuer la rigidité de la barrette longue, et de la rendre moins efficace en traction et plus sensible aux arrachements.

Enfin, la distance axiale de la rainure interne d'une barrette longue d'une rangée de barrettes est avantageusement égale à la distance axiale de la face d'extrémité axialement intérieure d'une barrette courte de la même rangée de barrettes. La distance axiale de la rainure interne est la distance axiale entre le plan moyen de la rainure interne, perpendiculaire à la ligne moyenne de la face de contact, et le plan équatorial du pneumatique. En d'autres termes, la rainure interne d'une barrette longue est positionnée axialement à l'aplomb des faces axialement intérieures respectives des barrettes courtes de la même rangée positionnées de part et d'autre de la barrette longue considérée. Tout se passe comme si la barrette longue avait une face d'extrémité axialement intérieure intermédiaire coïncidant avec les faces d'extrémité axialement intérieure des barrettes courtes adjacentes, ce qui a un effet favorable pour lutter contre l'usure irrégulière des barrettes courtes.

La présente invention sera mieux comprise à l'aide des figures 1 à 4 présentées ci-après :
- la figure 1 présente une vue en perspective d'un pneumatique selon l'invention,
- les figures 2 et 3 présentent la surface de roulement d'un pneumatique selon l'invention, développée dans un plan,
- la figure 4 présente une coupe d'une rainure d'extrémité d'une barrette longue,
- la figure 5 présente une coupe d'une rainure interne d'une barrette longue.

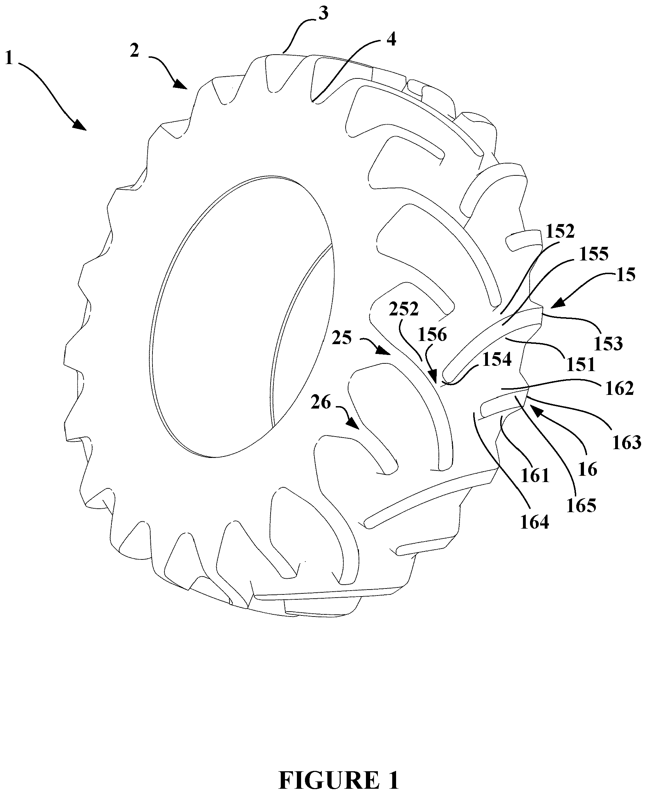

La figure 1 présente une vue en perspective d'un pneumatique 1 selon l'invention, comprenant une bande de roulement 2 destinée à venir en contact avec un sol par l'intermédiaire d'une surface de roulement 3. La bande de roulement 2 comprend une pluralité de barrettes (15, 16, 25, 26) s'étendant radialement entre une surface intérieure 4 de révolution autour de l'axe de rotation du pneumatique et la surface de roulement 3. Chaque barrette (15, 16) comprend une face latérale d'attaque (151, 161), une face latérale de fuite (152, 162), une face d'extrémité axialement extérieure (153, 163), une face d'extrémité axialement intérieure (154, 164), et une face de contact (155, 165). La pluralité de barrettes est répartie en une première rangée de barrettes (15, 16) et une seconde rangée de barrettes (25, 26) s'étendant axialement respectivement à partir d'une première extrémité axiale et d'une seconde extrémité axiale de la bande de roulement. Chaque rangée de barrettes est constituée d'une alternance de barrettes longues (15, 25) et de barrettes courtes (16, 26). Selon l'invention, la face d'extrémité axialement intérieure (154) d'une première barrette longue (15) d'une rangée de barrettes est séparée de la face latérale de fuite (252) de la deuxième barrette longue (25) de la rangée de barrettes symétrique, la plus proche de la face d'extrémité axialement intérieure de la première barrette longue, par une rainure d'extrémité (156).

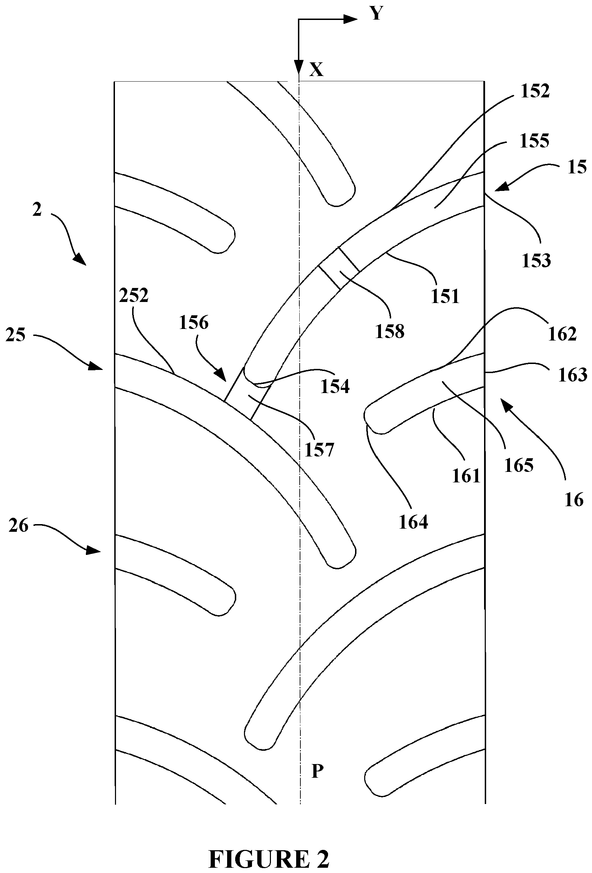

La figure 2 présente la surface de roulement d'un pneumatique 1 selon l'invention, développée dans un plan (X, Y), c'est-à-dire les faces de contact des barrettes longues (15, 25) et des barrettes courtes (16, 26). La figure 2 reprend les éléments de la figure 1, avec deux éléments supplémentaires : l'élément élastomérique de liaison 157 s'étendant radialement dans la rainure d'extrémité 156, et une rainure interne 158 positionnée dans la barrette longue 15, entre ses faces d'extrémité respectivement axialement extérieure 153 et intérieure 154.

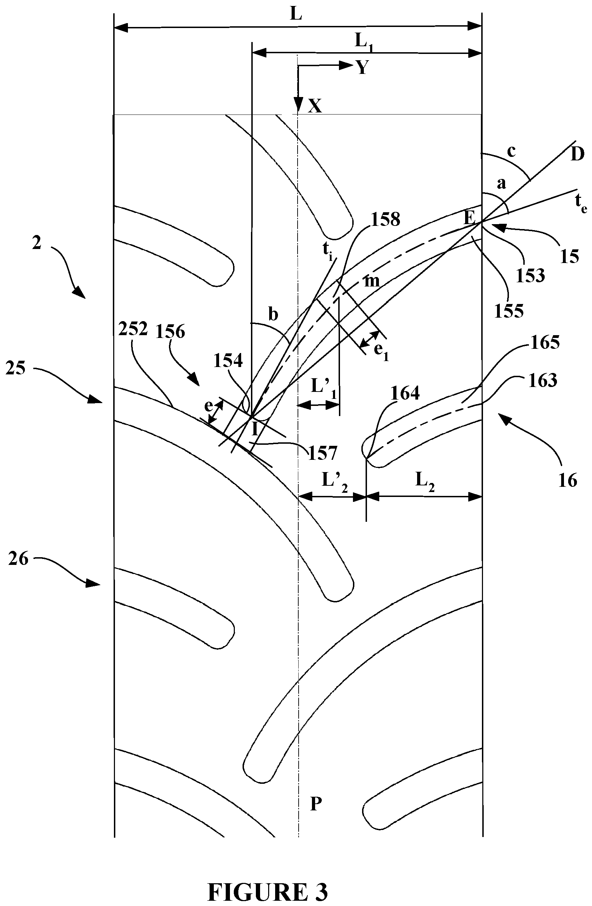

La figure 3 présente les paramètres géométriques de la surface de roulement, selon l'invention. La surface de roulement comprend deux extrémités axiales, la distance axiale entre les extrémités axiales étant la largeur de bande de roulement L. La bande de roulement 2 comprend une pluralité de barrettes, répartie en une première rangée de barrettes (15, 16) s'étendant axialement à partir d'une première extrémité axiale de la bande de roulement et une seconde rangée de barrettes (25, 26) s'étendant axialement à partir d'une seconde extrémité axiale de la bande de roulement, la seconde rangée de barrettes (25, 26) se déduisant de la première rangée de barrettes (15, 16) par une symétrie par rapport au plan équatorial (P) du pneumatique suivie d'une rotation autour de l'axe de rotation (Y) du pneumatique. Chaque rangée de barrettes est constituée d'une alternance de barrettes longues 15, dont la distance axiale L₁ entre les faces d'extrémité respectivement axialement extérieure et intérieure (153, 154) est au moins égale à la moitié de la largeur de bande de roulement L, et de barrettes courtes 16, dont la distance axiale L₂ entre les faces d'extrémité respectivement axialement extérieure et intérieure (163, 164) est au plus égale à la moitié de la largeur de bande de roulement L.

Selon l'invention, la face d'extrémité axialement intérieure 154 d'une première barrette longue 15 d'une rangée de barrettes est séparée de la face latérale de fuite 252 de la deuxième barrette longue 25 de la rangée de barrettes symétrique, la plus proche de la face d'extrémité axialement intérieure de la première barrette longue, par une rainure d'extrémité 156 de largeur e au moins égale à 10% et au plus égale à 100% de la hauteur de barrette.

Dans le mode de réalisation de la figure 3, la rainure d'extrémité 156 est au moins en partie remplie par un élément élastomérique de liaison 157 s'étendant radialement depuis la surface intérieure 4 de la bande de roulement. De plus, la barrette longue 15 comprend une rainure interne unique 158, de largeur e₁ et de distance axiale L'₁ par rapport au plan équatorial P.

La face de contact (155, 165) d'une barrette est en outre définie géométriquement par sa ligne moyenne m limitée par le point d'extrémité axialement extérieure E et le point d'extrémité axialement intérieure I. Le tracé géométrique de la ligne moyenne m est caractérisé par :
- l'angle d'inclinaison a de la tangente tₑ à la ligne moyenne m au point d'extrémité axialement extérieure E, par rapport à la direction circonférentielle X,
- l'angle d'inclinaison b de la tangente tᵢ à la ligne moyenne m au point d'extrémité axialement intérieure I, par rapport à la direction circonférentielle X,
- l'angle d'inclinaison moyen c de la droite D passant par les points d'extrémité respectivement axialement extérieure E et intérieure I, par rapport à la direction circonférentielle X.

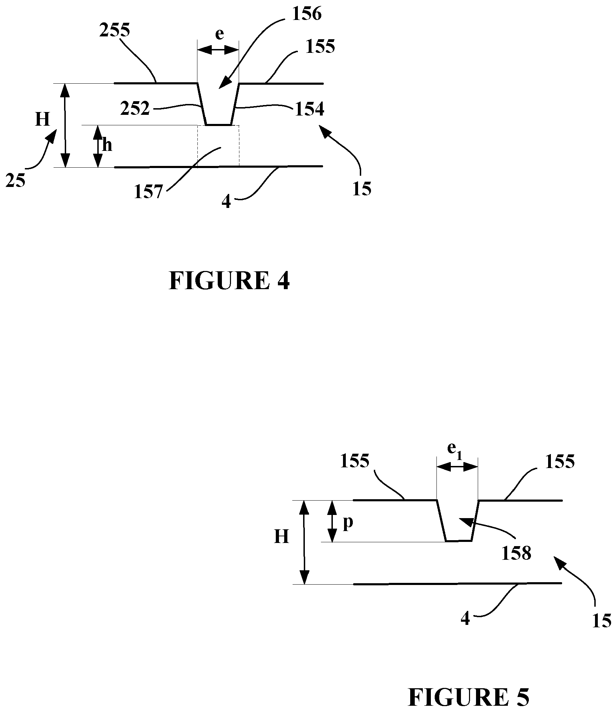

La figure 4 présente une coupe d'une rainure d'extrémité 156, réalisée selon un plan moyen, tangent à la ligne moyenne de la face de contact 155 à son extrémité axialement intérieure. La rainure d'extrémité 156, de largeur e, sépare la face d'extrémité axialement intérieure 154 de la barrette longue 15 de la face latérale de fuite 252 de la barrette longue 25. La largeur e de la rainure d'extrémité 156 est définie au niveau des faces de contact (155, 255) respectives des barrettes longues 15 et 25. La rainure d'extrémité 156 s'étend radialement entre la surface interne 4 et les faces de contact (155, 255) sur la hauteur de barrette H et est au moins en partie remplie par l'élément de liaison 157 qui s'étend radialement depuis la surface interne 4 sur une hauteur radiale h au plus égale à 75% de la hauteur de barrette H.

La figure 5 présente une coupe d'une rainure interne 158, réalisée selon un plan moyen, tangent à la ligne moyenne de la face de contact 155. La rainure interne 158, de largeur e₁, est positionnée dans une barrette longue 15. La largeur e₁ de la rainure interne 158 est définie au niveau de la face de contact 155 de la barrette longue 15. La rainure 158 s'étend radialement depuis la face de contact 155, sur une profondeur radiale p au moins égale à 25% de la hauteur de barrette H, distance radiale entre la surface interne 4 et la face de contact 155.

L'invention a été plus particulièrement étudiée pour un pneumatique agricole de dimension 600/65 R 38, dans le cas du deuxième mode de réalisation de l'invention avec une rainure d'extrémité partiellement remplie par un élément élastomérique de liaison, mais sans rainure intermédiaire. Pour cette dimension d'étude, la largeur de bande de roulement L est égale à 586 mm, la hauteur de barrette H est égale à 60 mm, la distance axiale L₁ entre les faces d'extrémité respectivement axialement extérieure et intérieure d'une barrette longue est égale à 365.5 mm et la distance axiale L₂ entre les faces d'extrémité respectivement axialement extérieure et intérieure d'une barrette courte est égale à 184 mm. La largeur e de la rainure d'extrémité est égale à 48 mm et la hauteur h de l'élément élastomérique de liaison est égale à 5 mm. Concernant l'orientation d'une barrette longue, les angles a, b et c sont respectivement égaux à 75°, 25° et 49.5°.

Les inventeurs ont comparé les performances en usure sous couple et en traction en champ du pneumatique d'étude, décrit précédemment, et d'un pneumatique de référence. Le pneumatique de référence comprend une bande de roulement, comprenant deux rangées de barrettes identiques entre elles, c'est-à-dire ayant toutes la même distance axiale entre leurs faces d'extrémité respectivement axialement extérieure et intérieure, et disposées en chevrons, le volume total de barrettes étant égal à celui du pneumatique d'étude. Le gain en performance d'usure sous couple moteur du pneumatique d'étude par rapport au pneumatique de référence est estimé à 20%, ce qui entraîne un supplément de durée de vie du pneumatique de 20%, pour un volume total de barrettes, c'est-à-dire un volume de gomme à user donné. Le gain en performance de traction en champ du pneumatique d'étude par rapport au pneumatique de référence est estimé à 10%, ce qui implique une augmentation de la capacité de traction de 10%, pour un effort donné de glissement du pneumatique par rapport au sol.

La présente invention peut être étendue à d'autres bandes de roulement, comprenant, plus de 2 rangées de barrettes. A titre d'exemple, la bande de roulement peut comprendre, en plus des deux rangées de barrettes s'étendant axialement respectivement à partir d'une première extrémité axiale et d'une seconde extrémité axiale de bande de roulement, une rangée de barrettes internes, constituant une partie médiane de la bande de roulement et ne débouchant pas sur une extrémité axiale de la bande de roulement.

## Revendications

1. Pneumatique (1) pour engin agricole polyvalent comprenant:
- une bande de roulement (2) destinée à venir en contact avec un sol par l'intermédiaire d'une surface de roulement (3) ayant deux extrémités axiales, la distance axiale entre les extrémités axiales étant la largeur de bande de roulement (L),
- la bande de roulement comprenant une pluralité de barrettes (15, 16, 25, 26) s'étendant radialement entre une surface intérieure (4) de révolution autour de l'axe de rotation du pneumatique et la surface de roulement (3), la distance radiale entre lesdites surfaces (3, 4) étant la hauteur de barrette (H),
- chaque barrette (15, 16) comprenant une face latérale d'attaque (151, 161), une face latérale de fuite (152, 162), une face d'extrémité axialement extérieure (153, 163), une face d'extrémité axialement intérieure (154, 164) et une face de contact (155, 165),
- la pluralité de barrettes étant répartie en une première rangée de barrettes (15, 16) s'étendant axialement à partir d'une première extrémité axiale de la bande de roulement et une seconde rangée de barrettes (25, 26) s'étendant axialement à partir d'une seconde extrémité axiale de la bande de roulement, la seconde rangée de barrettes (25, 26) se déduisant de la première rangée de barrettes (15, 16) par une symétrie par rapport au plan équatorial (P) du pneumatique suivie d'une rotation autour de l'axe de rotation (Y) du pneumatique,
- chaque rangée de barrettes étant constituée d'une alternance de barrettes longues (15), dont la distance axiale (L₁) entre les faces d'extrémité respectivement axialement extérieure et intérieure (153, 154) est au moins égale à la moitié de la largeur de bande de roulement (L), et de barrettes courtes (16), dont la distance axiale (L₂) entre les faces d'extrémité respectivement axialement extérieure et intérieure (163, 164) est au plus égale à la moitié de la largeur de bande de roulement (L),
- la face d'extrémité axialement intérieure (154) d'une première barrette longue (15) d'une rangée de barrettes étant séparée de la face latérale de fuite (252) de la deuxième barrette longue (25) de la rangée de barrettes symétrique, la plus proche de la face d'extrémité axialement intérieure de la première barrette longue, par une rainure d'extrémité (156) de largeur (e) au moins égale à 10% et au plus égale à 100% de la hauteur de barrette (H), **caractérisé en ce que** la rainure d'extrémité (156) entre la face d'extrémité axialement intérieure (154) d'une première barrette longue (15) d'une rangée de barrettes et la face latérale de fuite (252) d'une deuxième barrette longue (25) de la rangée de barrettes symétrique, la plus proche de la face d'extrémité axialement intérieure de la première barrette longue, est au moins en partie remplie par un élément élastomérique de liaison (157) s'étendant radialement vers l'extérieur depuis la surface intérieure (4) de la bande de roulement.

2. Pneumatique (1) selon la revendication 1, **caractérisé en ce que** la hauteur radiale (h) de l'élément élastomérique de liaison (157) est au plus égale à 75% de la hauteur de barrette (H).

3. Pneumatique (1) selon l'une des revendications 1 ou 2, **caractérisé en ce que** la distance axiale (L₁) entre les faces d'extrémité respectivement axialement extérieure (153) et intérieure (154) d'une barrette longue (15) est au plus égale à 70% de la largeur de bande de roulement (L).

4. Pneumatique (1) selon l'une des revendications 1 à 3, **caractérisé en ce que** la distance axiale (L₂) entre les faces d'extrémité respectivement axialement extérieure (163) et intérieure (164) d'une barrette courte (16) est au moins égale à 20% de la largeur de bande de roulement (L).

5. Pneumatique (1) selon l'une des revendications 1 à 4, **caractérisé en ce que** la distance axiale (L₂) entre les faces d'extrémité respectivement axialement extérieure (163) et intérieure (164) d'une barrette courte (16) est au plus égale à 40% de la largeur de bande de roulement (L).

6. Pneumatique (1) selon l'une des revendications 1 à 5, **caractérisé en ce que** l'angle d'inclinaison (a) de la tangente (tₑ) à la ligne moyenne (m) de la face de contact (155) d'une barrette (15) au point d'extrémité axialement extérieure (E) de ladite ligne moyenne, par rapport à la direction circonférentielle (X), est au moins égal à 45° et au plus égal à 90°, et de préférence au moins égal à 50° et au plus égal à 75°.

7. Pneumatique (1) selon l'une des revendications 1 à 6, **caractérisé en ce que** l'angle d'inclinaison (b) de la tangente (tᵢ) à la ligne moyenne (m) de la face de contact (155) d'une barrette longue (15) au point d'extrémité axialement intérieure (I) de ladite ligne moyenne, par rapport à la direction circonférentielle (X), est au moins égal à 15° et au plus égal à 45°, et de préférence au moins égal à 25° et au plus égal à 35°.

8. Pneumatique (1) selon l'une des revendications 1 à 7, **caractérisé en ce que** l'angle d'inclinaison moyen (c) de la droite (D) passant par les points d'extrémité respectivement axialement extérieure (E) et intérieure (I) de la ligne moyenne (m) de la face de contact (155) de la barrette longue (15), par rapport à la direction circonférentielle (X), est au moins égal à 40° et au plus égal à 60°.

9. Pneumatique (1) selon l'une des revendications 1 à 8, **caractérisé en ce que** chaque barrette longue (15) comprend au moins une rainure interne (158) entre ses faces d'extrémité respectivement axialement extérieure (153) et intérieure (154).

10. Pneumatique (1) selon la revendication 9, **caractérisé en ce qu'**une rainure interne (158) d'une barrette longue (15) a une largeur (e₁) au plus égale à 100% de la hauteur de barrette (H).

11. Pneumatique (1) selon l'une des revendications 9 ou 10, **caractérisé en ce que** la profondeur radiale (p) d'une rainure interne (158) d'une barrette longue (15) est au moins égale à 25% de la hauteur de barrette (H).

12. Pneumatique (1) selon l'une des revendications 9 à 11, **caractérisé en ce que** chaque barrette longue (15) comprend une seule rainure interne (158) entre ses faces d'extrémité respectivement axialement extérieure (153) et intérieure (154).

13. Pneumatique (1) selon la revendication 12, **caractérisé en ce que** la distance axiale (L'₁) de la rainure interne (158) d'une barrette longue (15) d'une rangée de barrettes est égale à la distance axiale (L'₂) de la face d'extrémité axialement intérieure (164) d'une barrette courte (16) de la même rangée de barrettes.

## Patentansprüche

1. Reifen (1) für ein universelles landwirtschaftliches Gerät, welcher umfasst:
- einen Laufstreifen (2), der dazu bestimmt ist, mit einem Boden über eine Lauffläche (3) in Kontakt zu kommen, die zwei axiale Enden aufweist, wobei der axiale Abstand zwischen den axialen Enden die Breite des Laufstreifens (L) ist,
- wobei der Laufstreifen mehrere Stollen (15, 16, 25, 26) umfasst, die sich radial zwischen einer inneren Rotationsfläche (4) um die Drehachse des Reifens und der Lauffläche (3) erstrecken, wobei der radiale Abstand zwischen den Flächen (3, 4) die Stollenhöhe (H) ist,
- wobei jeder Stollen (15, 16) eine seitliche Angriffsfläche (151, 161), eine seitliche Entweichfläche (152, 162), eine axial äußere Endfläche (153, 163), eine axial innere Endfläche (154, 164) und eine Kontaktfläche (155, 165) umfasst,
- wobei die mehreren Stollen in eine erste Reihe von Stollen (15, 16), die sich axial von einem ersten axialen Ende des Laufstreifens aus erstrecken, und eine zweite Reihe von Stollen (25, 26), die sich axial von einem zweiten axialen Ende des Laufstreifens aus erstrecken, aufgeteilt sind, wobei sich die zweite Reihe von Stollen (25, 26) aus der ersten Reihe von Stollen (15, 16) durch eine Symmetrie bezüglich der Äquatorialebene (P) des Reifens, gefolgt von einer Drehung um die Drehachse (Y) des Reifens, ableiten lässt,
- wobei jede Reihe von Stollen aus einander abwechselnden langen Stollen (15), deren axialer Abstand (L₁) zwischen der axial äußeren und der axial inneren Endfläche (153, 154) wenigstens gleich der Hälfte der Breite des Laufstreifens (L) ist, und kurzen Stollen (16), deren axialer Abstand (L₂) zwischen der axial äußeren und der axial inneren Endfläche (163, 164) höchstens gleich der Hälfte der Breite des Laufstreifens (L) ist, besteht,
- wobei die axial innere Endfläche (154) eines ersten langen Stollens (15) einer Reihe von Stollen von der seitlichen Entweichfläche (252) des zweiten langen Stollens (25) der symmetrischen Reihe von Stollen, welcher der axial inneren Endfläche des ersten langen Stollens am nächsten ist, durch eine Endrille (156) mit einer Breite (e) getrennt ist, die wenigstens 10 % und höchstens 100 % der Stollenhöhe (H) beträgt, **dadurch gekennzeichnet, dass** die Endrille (156) zwischen der axial inneren Endfläche (154) eines ersten langen Stollens (15) einer Reihe von Stollen und der seitlichen Entweichfläche (252) eines zweiten langen Stollens (25) der symmetrischen Reihe von Stollen, welcher der axial inneren Endfläche des ersten langen Stollens am nächsten ist, wenigstens teilweise von einem elastomerischen Verbindungselement (157) ausgefüllt ist, das sich von der inneren Fläche (4) des Laufstreifens aus radial nach außen erstreckt.

2. Reifen (1) nach Anspruch 1, **dadurch gekennzeichnet, dass** die radiale Höhe (h) des elastomerischen Verbindungselements (157) höchstens 75 % der Stollenhöhe (H) beträgt.

3. Reifen (1) nach einem der Ansprüche 1 oder 2, **dadurch gekennzeichnet, dass** der axiale Abstand (L₁) zwischen der axial äußeren (153) und der axial inneren Endfläche (154) eines langen Stollens (15) höchstens 70 % der Breite des Laufstreifens (L) beträgt.

4. Reifen (1) nach einem der Ansprüche 1 bis 3, **dadurch gekennzeichnet, dass** der axiale Abstand (L₂) zwischen der axial äußeren (163) und der axial inneren Endfläche (164) eines kurzen Stollens (16) wenigstens 20 % der Breite des Laufstreifens (L) beträgt.

5. Reifen (1) nach einem der Ansprüche 1 bis 4, **dadurch gekennzeichnet, dass** der axiale Abstand (L₂) zwischen der axial äußeren (163) und der axial inneren Endfläche (164) eines kurzen Stollens (16) höchstens 40 % der Breite des Laufstreifens (L) beträgt.

6. Reifen (1) nach einem der Ansprüche 1 bis 5, **dadurch gekennzeichnet, dass** der Neigungswinkel (a) der Tangente (tₑ) an die Mittellinie (m) der Kontaktfläche (155) eines Stollens (15) am axial äußeren Punkt (E) dieser Mittellinie bezüglich der Umfangsrichtung (X) wenigstens 45° und höchstens 90° und vorzugsweise wenigstens 50° und höchstens 75° beträgt.

7. Reifen (1) nach einem der Ansprüche 1 bis 6, **dadurch gekennzeichnet, dass** der Neigungswinkel (b) der Tangente (tᵢ) an die Mittellinie (m) der Kontaktfläche (155) eines langen Stollens (15) am axial inneren Punkt (I) dieser Mittellinie bezüglich der Umfangsrichtung (X) wenigstens 15° und höchstens 45° und vorzugsweise wenigstens 25° und höchstens 35° beträgt.

8. Reifen (1) nach einem der Ansprüche 1 bis 7, **dadurch gekennzeichnet, dass** der Neigungswinkel (c) der Geraden (D), die durch den axial äußeren (E) und den axial inneren Endpunkt (I) der Mittellinie (m) der Kontaktfläche (155) des langen Stollens (15) verläuft, bezüglich der Umfangsrichtung (X) wenigstens 40° und höchstens 60° beträgt.

9. Reifen (1) nach einem der Ansprüche 1 bis 8, **dadurch gekennzeichnet, dass** jeder lange Stollen (15) wenigstens eine innere Rille (158) zwischen seiner axial äußeren (153) und seiner axial inneren Endfläche (154) umfasst.

10. Reifen (1) nach Anspruch 9, **dadurch gekennzeichnet, dass** eine innere Rille (158) eines langen Stollens (15) eine Breite (e₁) aufweist, die höchstens 100 % der Stollenhöhe (H) beträgt.

11. Reifen (1) nach einem der Ansprüche 9 oder 10, **dadurch gekennzeichnet, dass** die radiale Tiefe (p) einer inneren Rille (158) eines langen Stollens (15) wenigstens 25 % der Stollenhöhe (H) beträgt.

12. Reifen (1) nach einem der Ansprüche 9 bis 11, **dadurch gekennzeichnet, dass** jeder lange Stollen (15) eine einzige innere Rille (158) zwischen seiner axial äußeren (153) und seiner axial inneren Endfläche (154) umfasst.

13. Reifen (1) nach Anspruch 12, **dadurch gekennzeichnet, dass** der axiale Abstand (L'₁) der inneren Rille (158) eines langen Stollens (15) einer Reihe von Stollen gleich dem axialen Abstand (L'₂) der axial inneren Endfläche (164) eines kurzen Stollens (16) derselben Reihe von Stollen ist.

## Claims

1. Tyre (1) for a multipurpose agricultural machine, comprising:
- a tread (2) designed to come into contact with the ground via a tread surface (3) having two axial ends, the axial distance between the axial ends being the width of the tread (L),
- the tread comprising a plurality of lugs (15, 16, 25, 26) extending radially between an inner surface (4) of revolution about the rotation axis of the tyre and the tread surface (3), the radial distance between the said surfaces (3, 4) being the lug height (H),
- each lug (15, 16) comprising a leading lateral face (151, 161), a trailing lateral face (152, 162), an axially outer end face (153, 163), an axially inner end face (154, 164) and a contact face (155, 165),
- the plurality of lugs being distributed in a first row of lugs (15, 16) extending axially from a first axial end of the tread and a second row of lugs (25, 26) extending axially from a second axial end of the tread, the second row of lugs (25, 26) differing from the first row of lugs (15, 16) by a symmetry relative to the equatorial plane (P) of the tyre followed by a rotation about the rotation axis (Y) of the tyre,
- each row of lugs consisting of an alternation of long lugs (15), of which the axial distance (L₁) between the respectively axially outer and inner end faces (153, 154) is at least equal to half the width of the tread (L), and of short lugs (16), of which the axial distance (L₂) between the respectively axially outer and inner end faces (163, 164) is at most equal to half the width of the tread (L),
- the axially inner end face (154) of a first long lug (15) of a row of lugs being separated from the trailing lateral face (252) of the second long lug (25) of the symmetrical row of lugs, closest to the axially inner end face of the first long lug, by an end groove (156) with a width (e) at least equal to 10% and at most equal to 100% of the lug height (H),
**characterized in that** the end groove (156) between the axially inner end face (154) of a first long lug (15) of a row of lugs and the trailing lateral face (252) of a second long lug (25) of the symmetrical row of lugs, closest to the axially inner end face of the first long lug, is at least partly filled by an elastomeric linking element (157) extending radially outwards from the inner surface (4) of the tread.

2. Tyre (1) according to Claim 1, **characterized in that** the radial height (h) of the elastomeric linking element (157) is at most equal to 75% of the lug height (H).

3. Tyre (1) according to either of Claims 1 and 2, **characterized in that** the axial distance (L₁) between the respectively axially outer end face (153) and inner end face (154) of a long lug (15) is at most equal to 70% of the tread width (L).

4. Tyre (1) according to one of Claims 1 to 3, **characterized in that** the axial distance (L₂) between the respectively axially outer end face (163) and inner end face (164) of a short lug (16) is at least equal to 20% of the tread width (L).

5. Tyre (1) according to one of Claims 1 to 4, **characterized in that** the axial distance (L₂) between the respectively axially outer end face (163) and inner end face (164) of a short lug (16) is at most equal to 40% of the tread width (L).

6. Tyre (1) according to one of Claims 1 to 5, **characterized in that** the angle of inclination (a) of the tangent (tₑ) to the centre line (m) of the contact face (155) of a lug (15) at the axially outer end point (E) of the said centre line, relative to the circumferential direction (X), is at least equal to 45° and at most equal to 90°, and preferably at least equal to 50° and at most equal to 75°.

7. Tyre (1) according to one of Claims 1 to 6, **characterized in that** the angle of inclination (b) of the tangent (tᵢ) to the centre line (m) of the contact face (155) of a long lug (15) at the axially inner end point (I) of the said centre line, relative to the circumferential direction (X), is at least equal to 15° and at most equal to 45°, and preferably at least equal to 25° and at most equal to 35°.

8. Tyre (1) according to one of Claims 1 to 7, **characterized in that** the average angle of inclination (c) of the straight line (D) passing through the respectively axially outer end point (E) and inner end point (I) of the centre line (m) of the contact face (155) of the long lug (15), relative to the circumferential direction (X), is at least equal to 40° and at most equal to 60°.

9. Tyre (1) according to one of Claims 1 to 8, **characterized in that** each long lug (15) comprises at least one inner groove (158) between its respectively axially outer end face (153) and inner end face (154).

10. Tyre (1) according to Claim 9, **characterized in that** an inner groove (158) of a long lug (15) has a width (e₁) at most equal to 100% of the lug height (H).

11. Tyre (1) according to either of Claims 9 and 10, **characterized in that** the radial depth (p) of an inner groove (158) of a long lug (15) is at least equal to 25% of the lug height (H).

12. Tyre (1) according to one of Claims 9 to 11, **characterized in that** each long lug (15) comprises a single inner groove (158) between its respectively axially outer end face (153) and inner end face (154).

13. Tyre (1) according to Claim 12, **characterized in that** the axial distance (L'₁) of the inner groove (158) of a long lug (15) of a row of lugs is equal to the axial distance (L'₂) of the axially inner end face (164) of a short lug (16) of the same row of lugs.
